# EUROPEAN PATENT SPECIFICATION

(11) **EP 2 104 712 B1**
(45) Date of publication and mention of the grant of the patent: **25.06.2014**
(21) Application number: 07858018.0
(22) Date of filing: 20.12.2007
(51) Int. Cl.: C08L 67/02, C08L 23/12

(54) **POLYMERIC COMPOSITION COMPRISING POLYOLEFINS AND ALIPHATIC-AROMATIC COPOLYESTERS**
POLYMERZUSAMMENSETZUNG, ENTHALTEND POLYOLEFINE UND ALIPHATISCHE-AROMATISCHE COPOLYESTER
COMPOSITION POLYMÈRE COMPRENANT DES POLYOLÉFINES ET DES COPOLYESTERS ALIPHATIQUES-AROMATIQUES

(30) Priority: 21.12.2006 IT MI20062469
(43) Date of publication of application: 30.09.2009
(73) Proprietor: Novamont S.p.A., 28100 Novara (IT)
(72) Inventor: BASTIOLI, Catia, 28100 Novara (IT); MARANGON, Roberto, 28100 Novara (IT)
(74) Representative: Zanoli, Enrico
(86) International application number: PCT/EP2007/064399
(87) International publication number: WO 2008/074878

(56) References cited:
- WO-A-2005/035656
- US-A- 4 341 690
- US-A- 5 424 362
- US-A1- 2004 213 966

## Description

The present invention concerns a polymeric composition comprising polyolefins, and aromatic aliphatic copolyesters with improved dyeability, paintability and mass colourability.

In particular the present invention refers to binary compositions of isotactic polypropylene with aliphatic-aromatic copolyesters of the diacid diol type able to improve performance of the polyolefin in terms of paintability of moulded components, colourability of fibres and improvement of fibre strength.

The products obtained from said compositions are particularly useful in the field of fibres and fabrics; but also have many applications in the field of injection moulding and foamed materials. The compositions of the invention are furthermore useful for obtaining blown films for bi-oriented films and many other applications.

It is known that polyolefins are polymers not compatible with the majority of polymers. Due to their low surface tension, they have poor compatibility with the majority of known polymers and are thus also difficult to paint and colour. For example polypropylene fibres are generally mass-coloured. Unlike polyester fibres, which are woven neutral and then coloured, polypropylene fibres, since they are mass-coloured, give rise to serious warehouse management problems. Furthermore it is known that the above-mentioned incompatibility represents one of the biggest problems for the recylability of polyolefins.

The techniques for increasing the surface tension, and therefore the paintability or colourability of polyolefins, consists above all in modifying them by means of copolymerisation techniques which involve the insertion of polar blocks such as, for example, ethylene-vinylacrylate or, as in the case of polypropylene, grafting of polyacrylates. These modifications limit the performance of the polyolefins. Another method is blending with non-olefinic polymers in the presence of specific compatibilising agents such as polyethylene vinylacetate (WO06-064732).

US 4,341,690 discloses stabilized polypropylene compositions comprising polypropylene, talc and polyester. The compositions are suitable for moulding and extrusion but there is no disclosure about using these compositions to make articles such as films, fibres, fabrics, non-woven fabrics. Also, there is no disclosure about reducing the problems of warehouse management and recyclability of polyolefins like polypropylene.

WO 2005/035656 discloses a resin composition comprising from 10 to 99 wt.% of a biodegradable aliphatic polyester and from 90 to 1 wt.% of a polyolefin. There is no disclosure about using this composition to make articles such as films, fibres, fabrics, non-woven fabrics. Also, the polyester component of the composition is entirely aliphatic.

US 2004/0213966 A1 discloses a coextruded, transparent, biaxially oriented polyester film comprising a layer (A) consisting of 50-95 % by weight of polyester and 5-40 % by weight of a polyester-incompatible polymer (=anti-PET polymer). The polyester comprises units deriving from diacids and diols, the diacid component comprising 20-95 mol % of aromatic diacids and 5-80 % of aliphatic diacids (see abstract). Examples of aliphatic diacids are pimelic acid, suberic acid, azelaic acid, sebacic acid, glutaric acid and adipic acid. Examples of suitable anti-PET polymers are polymers based on ethylene (e.g. LLDPE, HDPE), propylene (PP), cycloolefins (CO), amides (PA) or styrenes (PS). Therefore the composition according to US 2004/0213966 A1 can comprise an amount of polypropylene not higher than 40 wt.%.

US 5,424,362 discloses paintable olefinic interpolymer compositions. There is no disclosure about using this composition to make articles such as films, fibres, fabrics, non-woven fabrics. Also, there is no disclosure about using an aliphatic-aromatic polyester component in the compositions.

It has now been discovered that aliphatic-aromatic copolyesters of the diacid-diol type with aromatic part consisting mainly of terephthalic acid or its derivatives, aliphatic part consisting a diacid monomer selected from C₉-C₁₃, particularly azelaic acid, sebacic acid and brassylic acid or their mixtures, and diol C₂-C₁₃, preferably C₂-C₄, even more preferably C₄, are particularly compatible with polyolefins, in particular with isotactic polypropylene, in the absence of compatibilising agents.

In particular the aliphatic-aromatic copolyesters have an aromatic acid content with respect to the total acid content of between 30 and 80%, preferably between 45 and 60%.

The present invention refers to articles comprising a polymeric composition comprising, with respect to the total weight of the composition:
- polyolefin in quantity of 60-99,5 % preferably of 80-99 %;
- biodegradable aliphatic-aromatic copolyesters of the diacid diol type in quantity of 0,5-40 % preferably of 1-20 %;
characterized in that the biodegradable aliphatic-aromatic copolyesters contain an aromatic part consisting mainly of terephthalic acid or its derivatives, an aliphatic part consisting of a diacid monomer selected from C₉-C₁₃, particularly azelaic acid, sebacic acid and brassylic acid and their mixtures, and diol C₂-C₁₃, preferably C₂-C₄, even more preferably C₄, such as butanediol, said articles being selected from the group consisting of films, fibres, fabrics, non-woven fabrics.

In the composition according to the present invention the preferred polyolefin is isotactic polypropylene.

In a preferred embodiment of the present invention the biodegradable aliphatic-aromatic copolyesters have an aromatic acid content with respect to the total acid content between 30 and 80%, preferably between 45 and 60%.

The compatibility between copolyesters and polypropylene is so high as to permit spinnability of binary mixtures of polypropylene and copolyester in conditions similar to those of the polypropylene as such.

Said fibres are furthermore surprisingly dyeable with dyes of various types showing a dyeability equivalent to that of polyesters. The coloured fibres also have excellent colour fastness to light. Particularly noticeable is that the dyeing process of these fibres can be performed at temperatures less than 130 °C, preferably less than 100°C.

Furthermore since the copolyesters of the compositions according to the invention have self-extinguishing properties in themselves, the compositions can be self-extinguishing without the need to add flameproof additives.

The biodegradable copolyesters forming part of the composition according to the present invention can be polymerised via polycondensation. Furthermore the copolyesters can be branched via the introduction of polyfunctional monomers such as glycerine, epoxidised soya oil, trimethylolpropane and similar or polycarboxylic acids such as butantetracarboxylic acid. The copolyesters can also be supplemented with chain extenders such as difunctional, trifunctional or tetrafunctional anhydrides like maleic anhydride, trimellitic or pyromellitic anhydride, with polyepoxides, aliphatic and aromatic isocyanates.

The composition according to the invention, or the individual components of the same, can be regraded with isocyanates in the molten state, at the end of the polymerisation reaction or in the extrusion phase, or in the solid state, as described for example in the patent application Novamont WO 99/28367. The binary composition or the individual components thereof can also be supplemented with chain extenders or cross-linking agents of the above types in the mixing phase.

Various additives such as antioxidants, UV stabilisers, thermal stabilisers and stabilisers against hydrolysis, flame retardants, slow release agents, inorganic and organic fillers, for example natural fibres, antistatic agents, wetting agents, colourants and lubricants can also be added to the composition.

In particular, in the production of films by blowing or flat sheet die, as is or bi-oriented, the following can be added: silica, calcium carbonate, talc, kaolin, kaolinite, zinc oxide, various wollastonites and in general lamellar inorganic substances, functionalised or otherwise with organic molecules, capable of splitting into lamellae during mixing with the polymeric mixture or with one of the individual polymers of the mixture to produce nanocomposites with improved antiblocking and barrier properties. The various inorganic substances can be used in a mixture or as individual products. The concentration of the inorganic additives is generally between 0.05 and 70%, preferably between 0.5 and 50%, even more preferably between 1 and 30%.

In the case of natural fibres and fillers such as cellulose fibre, sisal, hazelnut meal, corncobs, rice chaff, soya and similar and their mixtures, the preferred concentrations range from 0.5 to 70%, more preferably from 1 to 50%. It is also possible to load the binary mixtures with mixed inorganic and vegetable fillers.

To improve the filmability characteristics, amides of aliphatic acids can be added such as oleamide, stearaniide, erucamide, behenamide, N-oleylpalmitamide, Nstearyl-erucamide and other amides, salts of fatty acids such as aluminium stearate, zinc stearate and calcium stearate, and similar. The quantities of these additives vary from 0.05 to 7 parts and preferably between 0.1 and 5 parts of the polyolefin and copolyester composition.

The compositions according to the present invention can also be used to obtain fibres for fabrics and non-woven fabrics, or for fishing nets. Furthermore the non-woven fabric can be used in the sector of nappies, sanitary towels, carpet fibres, for stuffing etc. The fibres can also be used as reinforcing fibres in special paper.

The composition according to the invention can be advantageously used also for the production of sheet for thermoforming, monoextruded or coextruded with other layers of polymers and then thermoformed into trays for food, containers for agriculture and other.

### EXAMPLES

### Example 1

90% homopolymer isotactic polypropylene (MFI = 25), 10% polybutylene sebacate-co-terephthalate (39% sebacic- - 61% terephthalic); MFR = 10 at 190°C and 2.16 kg) are fed into a polypropylene spinning plant under the following conditions:
extruder thermal profile: 230-230-230-230°C
duct: 230°C
head: 230°C
godet A: 525 m/min (heated to 50°C)
godet B: 780 m/min (heated to 120°C)
godet C: 1653 m/min (heated to 125°C)
godet D: 1517 m/min (this spooler relay godet is not heated)
spooler speed: 1500 m/min
working pressure: 70 bar
extruder speed: 17.7 RPM
extruder motor absorption: 12.7 A
spinning pump: 6.5 RPM
3 threading dies with 2 x 25 round holes, diameter 0.65 mm (6 den/filament yarn)

The fibres obtained were dyed (1 kg of fibres in 20 kg of colouring solution) using 1.5% blu foron E5R as colourant.

The dyeing temperature used was 115°C showing optimal dyeability equivalent to the fibres of the pure polybutylen sebacate-co- terephthalate and excellent colour fastness to light.

### Example 2

94% homopolymer isotactic polypropylene (MFI = 25), 6% polybutylen sebacate-co-terephthalate (39 - 61% sebacic acid -terephthalic acid ; MFR = 10 at 190°C and 2.16 kg) are fed into a polypropylene spinning plant under the same conditions of Example 1.

The fibres obtained were dyed (1 kg of fibres in 20 kg of colouring solution) using 1.5% blu foron E5R as colourant.

The dyeing temperature used was 98°C showing optimal dyeability equivalent to the fibres of the pure polybutylen sebacate-co- terephthalate and excellent colour fastness to light.

Sheets have been made with the compositions of examples 1 and 2.

The compositions of Example 1 and 2 were supplied to a twin screw extruder, pelletized at the exit of the extruder and then fed to an injection molding press mod. Sandretto S/7.

The sheets had a thickness of about 1 mm and dimensions of 70 mm x 80 mm.

They were painted with a common spray dye Arexons "*fai tu color*". The tickness of the dye was about 10 µ. In order to guarantee a good adhesion of the dye, the sheets were degreased before applying the dye. The coloured sheets were left at room temperature and 50% RH for 4 hours.

The coloured sheets were then tested with reference to the adhesion of the colour by means of a folding test and a scratching test.

The folding test consisted in three consecutive foldings of the sheets along their median axis. For each folding, the two non coloured half parts of the sheets were forced to match.

The scratching test consisted in scratching three consecutive times the coloured surface of the sheets with the edge of a metal small plate (such as a coin) inclined at 45° with respect to the sheet coloured surface.

To compare the properties of the compositions according to the present invention, propylene (homopolymer isotactic polypropylene, MFI=25 ) sheets were made and coloured as above described.

The results are reported in Table 1.

**Table 1.**

| Example | Folding test | Scratching test |
|---|---|---|
| 1 | Yes | Yes |
| 2 | Yes | Yes |
| Comparative (polypropylene) | No | No |

The results has been visually evaluated in relation to the quantity of dye removed.

Yes: the dye layer wasn't removed from the surface of the sheet at the end of the test;

No: the dye layer was completely removed from the surface of the sheet at the end of the test.

## Claims

1. Articles comprising a polymeric composition comprising:
- from 60 to 99.5 % wt of a polyolefin;
- from 40 to 0.5 % wt of biodegradable aliphatic-aromatic copolyesters of the diacid diol type;
**characterized in that** said biodegradable aliphatic-aromatic copolyesters contain an aromatic part consisting mainly of terephthalic acid or its derivatives, an aliphatic part consisting of a diacid monomer selected from C₉-C₁₃, and diol C₂-C₁₃;
said articles being selected from the group consisting of films, fibres, fabrics, non-woven fabrics.

2. Articles according to Claim 1, **characterized in that** said polyolefin is present in quantity of 80-99 % wt and said biodegrable aliphatic-aromatic copolyesters are present in quantity of 1-20 % wt with respect to the total weight of the composition.

3. Articles according to any preceding claims, **characterized in that** said polyolefin is isotactic polypropylene.

4. Articles according to any preceding claims, **characterized in that** said biodegradable aliphatic-aromatic copolyesters have an aromatic acid content with respect to the total acid content of from 30 % to 80 %.

5. Articles according to Claim 4 **characterized in that** said biodegradable aliphatic-aromatic copolyesters have an aromatic acid content with respect to the total acid content of from 45 to 60%.

6. Articles according to any preceding claims **characterized in that** said diol is C₂-C₄.

7. Articles according to Claim 6, **characterized in that** said diol is butanediol.

8. Articles according to Claim 1, **characterized in that** said diacid monomer is selected from azelaic acid, sebacic acid and brassylic acid and their mixtures.

9. Film as claimed in claim 1, selected from the group consisting of blown film or flat sheet die film, said film being as such, oriented or bi-oriented.

10. Film as claimed in claim 9, **characterized in that** it comprises one or more additives chosen from the group consisting of silica, calcium carbonate, talc, kaolin, kaolinite, zinc oxide, wollastonite, lamellar inorganic substances optionally functionalised with organic molecules and capable of splitting into lamellae during mixing with said polymeric composition or with one of the individual polymers of the mixture to produce nanocomposites.

11. Film as claimed in claim 10, **characterized by** a concentration of inorganic additives between 0.05 and 70% in weight with respect to the sum of polyolefin and aliphatic-aromatic copolyester.

12. Film as claimed in claim 10, comprising one or more additives such as natural fibres and fillers.

13. Use of non-woven fabric as claimed in claim 1 as a component of nappies, sanitary towels and disposable sanitary articles.

## Patentansprüche

1. Artikel mit einer Polymerzusammensetzung, umfassend:
- ein Polyolefin von 60 bis 99,5 Gew.%;
- biologisch abbaubare aliphatisch-aromatische Copolyester von dem Disäuredioltyp von 40 bis 0,5 Gew.%;
**dadurch gekennzeichnet, dass** die biologisch abbaubaren aliphatisch-aromatischen Copolyester einen aromatischen Teil, der hauptsächlich aus Terephthalsäure oder dessen Derivaten besteht, einen aliphatischen Teil, der aus einem Disäuremonomer, ausgewählt aus C₉-C₁₃, besteht, und ein C₂-C₁₃-Diol enthalten;
wobei die Artikel aus der Gruppe, bestehend aus Folien, Fasern, Stoffen und Vliesstoffen, ausgewählt sind.

2. Artikel gemäß Anspruch 1, **dadurch gekennzeichnet, dass** das Polyolefin in einer Menge von 80 bis 99 Gew.% vorhanden ist und die biologisch abbaubaren aliphatisch-aromatischen Copolyester in einer Menge von 1 bis 20 Gew.%, bezogen auf das Gesamtgewicht der Zusammensetzung, vorhanden sind.

3. Artikel gemäß einem der vorangehenden Ansprüche, **dadurch gekennzeichnet, dass** das Polyolefin isotaktisches Polypropylen ist.

4. Artikel gemäß einem der vorangehenden Ansprüche, **dadurch gekennzeichnet, dass** die biologisch abbaubaren aliphatisch-aromatischen Copolyester einen aromatischen Säuregehalt von 30 % bis 80 % bezüglich des Gesamtsäuregehalts haben.

5. Artikel gemäß Anspruch 4, **dadurch gekennzeichnet, dass** die biologisch abbaubaren aliphatisch-aromatischen Copolyester einen aromatischen Säuregehalt von 45 bis 60 % bezüglich des Gesamtsäuregehalts haben.

6. Artikel gemäß einem der vorangehenden Ansprüche, **dadurch gekennzeichnet, dass** das Diol C₂-C₄ ist.

7. Artikel gemäß Anspruch 6, **dadurch gekennzeichnet, dass** das Diol Butandiol ist.

8. Artikel gemäß Anspruch 1, **dadurch gekennzeichnet, dass** das Disäuremonomer aus Azelainsäure, Sebacinsäure und Brassylsäure und deren Mischungen ausgewählt wird.

9. Folie gemäß Anspruch 1, ausgewählt aus der Gruppe, bestehend aus einer Blasfolie oder einer Breitschlitzdüsenfolie, wobei die Folie als solche orientiert oder bi-orientiert ist.

10. Folie gemäß Anspruch 9, **dadurch gekennzeichnet, dass** sie ein oder mehrere Zusatzstoffe umfasst, die aus der Gruppe, bestehend aus Silika, Kalziumcarbonat, Talkum, Kaolin, Kaolinit, Zinkoxid, Wollastonit und lamellaren anorganischen Substanzen, die wahlweise mit organischen Molekülen funktionalisiert sind und in der Lage sind, sich beim Mischen mit der Polymerzusammensetzung oder mit einem der einzelnen Polymere der Mischung in Lamellen aufzuspalten, um Nanokomposite zu bilden, ausgewählt werden.

11. Folie gemäß Anspruch 10, die durch eine Konzentration der anorganischen Zusatzstoffe zwischen 0,05 und 70 Gew.%, bezogen auf die Summe des Polyolefins und des aliphatisch-aromatischen Copolyesters, gekennzeichnet ist.

12. Folie gemäß Anspruch 10, die ein oder mehrere Zusatzstoffe, wie natürliche Fasern und Füllstoffe, umfasst.

13. Verwendung des Vliesstoffes gemäß Anspruch 1 als Bestandteil von Windeln, Binden und Einweg-Hygieneartikeln.

## Revendications

1. Articles comprenant une composition polymère comprenant :
- de 60 à 99,5 % en poids d'une polyoléfine ;
- de 40 à 0,5 % en poids de copolyesters aliphatiques-aromatiques biodégradables du type diacide diol ;
**caractérisés en ce que** lesdits copolyesters aliphatiques-aromatiques biodégradables contiennent une partie aromatique principalement constituée d'acide téréphtalique ou de ses dérivés, une partie aliphatique constituée d'un monomère de diacide choisi parmi le C₉-C₁₃, et du diol en C₂ à C₁₃ ;
lesdits articles étant choisis dans le groupe constitué de films, de fibres, de tissus, de non-tissés.

2. Articles selon la revendication 1, **caractérisés en ce que** ladite polyoléfine est présente en une quantité de 80 à 99 % en poids et lesdits copolyesters aliphatiques-aromatiques biodégradables sont présents en une quantité de 1 à 20 % en poids par rapport au poids total de la composition.

3. Articles selon l'une quelconque des revendications précédentes, **caractérisés en ce que** ladite polyoléfine est un polypropylène isotactique.

4. Articles selon l'une quelconque des revendications précédentes, **caractérisés en ce que** lesdits copolyesters aliphatiques-aromatiques biodégradables ont une teneur en acide aromatique par rapport à la teneur totale en acide de 30 % à 80 %.

5. Articles selon la revendication 4 **caractérisés en ce que** lesdits copolyesters aliphatiques-aromatiques biodégradables ont une teneur en acide aromatique par rapport à la teneur totale en acide de 45 à 60 %.

6. Articles selon l'une quelconque des revendications précédentes **caractérisés en ce que** ledit diol est en C₂ à C₄.

7. Articles selon la revendication 6, **caractérisés en ce que** ledit diol est du butanediol.

8. Articles selon la revendication 1, **caractérisés en ce que** ledit monomère de diacide est choisi parmi l'acide azélaïque, l'acide sébacique et l'acide brassylique et leurs mélanges.

9. Film selon la revendication 1, choisi dans le groupe constitué d'un film soufflé ou d'un film obtenu à l'aide d'une filière plate, ledit film étant tel quel, orienté ou bi-orienté.

10. Film selon la revendication 9, **caractérisé en ce qu'**il comprend un ou plusieurs additifs choisis dans le groupe constitué de la silice, du carbonate de calcium, du talc, du kaolin, de la kaolinite, de l'oxyde de zinc, de la wollastonite, de substances inorganiques lamellaires éventuellement fonctionnalisées avec des molécules organiques et capables de se séparer en lamelles pendant le mélange avec ladite composition polymère ou avec l'un des polymères individuels du mélange pour produire des nanocomposites.

11. Film selon la revendication 10, **caractérisé par** une concentration d'additifs inorganiques entre 0,05 et 70 % en poids par rapport à la somme de la polyoléfine et du copolyester aliphatique-aromatique.

12. Film selon la revendication 10, comprenant un ou plusieurs additifs tels que des fibres naturelles et des charges.

13. Utilisation de non-tissé selon la revendication 1 en tant que composant de couches pour bébé, de serviettes hygiéniques et d'articles sanitaires jetables.
